# EUROPÄISCHE PATENTSCHRIFT

(11) **EP 1 705 106 B1**
(45) Veröffentlichungstag und Bekanntmachung des Hinweises auf die Patenterteilung: **11.02.2009**
(21) Anmeldenummer: 06005842.7
(22) Anmeldetag: 22.03.2006
(51) Int. Cl.: B62D 65/02, B65D 65/00

(54) **Verfahren und Vorrichtung zur Beeinflussung der Bauteillage bei der Herstellung von zu fügenden/partiell umzuformenden Kraftfahrzeugkarosseriebauteilen**
Method and apparatus for controlling the positioning of a part during manufacturing of joining/partially shaping motor vehicle body parts
Méthode et appareil de contrôle du positionnement d'une pièce pendant la manufacture de l'assemblage/partiellement formage de pièces de carrosseries de véhicules automobiles

(30) Priorität: 24.03.2005 DE 102005014354
(43) Veröffentlichungstag der Anmeldung: 27.09.2006
(73) Patentinhaber: ThyssenKrupp Drauz Nothelfer GmbH, 74076 Heilbronn (DE)
(72) Erfinder: Reuter, Uwe, 09112 Chemnitz (DE); Stein, Hans, 09337Hohenstein-Ernstthal OT Wüstenbrand (DE)
(74) Vertreter: Findeisen Hübner Neumann

(56) Entgegenhaltungen:
- EP-A2- 1 000 699
- DE-A1- 10 242 710
- DE-A1- 10 347 553

## Beschreibung

Die Erfindung betrifft ein Verfahren und eine Vorrichtung zur Beeinflussung der Bauteillage bei der Herstellung von zu fügenden/partiell umzuformenden Kraftfahrzeugkarosseriebauteilen. Anwendung findet die Erfindung dort, wo mindestens zwei Bauteile zu einer Karosseriebaugruppe (z.B. B-Säule, Seitenteil, Unterbau) zusammengefügt werden.

Bei der Herstellung einer Karosseriebaugruppe, die aus zwei Bauteilen zusammengefügt wird, ist es allgemein bekannt, dass die Bauteile formschlüssig auf fixierte Spannauflagen aufgelegt, gegeneinander verspannt und nachfolgend gefügt (z.B. verschweißt) werden.

Nachteilig wirkt sich dabei aus, dass durch die fest eingestellten Spannauflagen auf noch zulässige Veränderungen, die sich aus Formabweichungen der angelieferten Bauteile ergeben, nur durch manuelle und auf einer empirischen Grundlage beruhenden Eingriffe reagiert werden kann, die für eine automatisierte Fertigung ausscheiden müssen. Außerdem ist es nicht möglich, Bauteile, die innerhalb bestimmter Grenzen von Sollabweichungen hinsichtlich Geometrie und Maßhaltigkeit geprägt sind, im Endergebnis zu einer Karosseriebaugruppe zu vereinigen, die ihrerseits bezüglich der Maßhaltigkeit die vorgegebenen Anforderungen erfüllt. Weiterhin kann eine Aussonderung grundsätzlich unbrauchbarer Bauteile vor dem Fügen nicht erfolgen, so dass aufwändige Nachkontrollen erforderlich sind bzw. Ausschuss entsteht. Letztlich kann eine kontinuierliche Fertigung, enge Toleranzen bei der Formabweichung der Bauteile vorausgesetzt, nur durch Vorschaltung eines langwierigen, allein auf empirische Grundlage basierenden Probelaufes abgesichert werden.

Eine weitere Lösung zur Beeinflussung der Bauteillage bei der Herstellung von zu fügenden/partiell umzuformenden Kraftfahrzeugkarosseriebauteilen ist aus der EP 1 000 699 A2 bekannt.

D1 offenbart in dem Wortlaut von Anspruch 1 ein Verfahren zur Beeinflussung der Bauteillage bei der Herstellung von zu fügenden/partiell umzuformenden Kraftfahrzeugkarosseriebauteilen, wobei die Bauteile auf Spannauflagen aufgelegt, verspannt und nachfolgend zu einer Karosseriebaugruppe verbunden werden, und wobei
- die Bauteile nach dem Auflegen auf die Spannauflagen in Bezug auf Geometrieabweichungen gegenüber vorgegebenen Sollwerten vermessen werden,
- die Bauteile anschließend gespannt werden und der Füge-/Umformprozess zur Bildung einer Karosseriebaugruppe durchgeführt wird,
- nachfolgend die Spannung gelöst und die somit gefertigte Karosseriebaugruppe (2) erneut im Bereich der Spannauflagen vermessen wird.

Die Aufgabe der Erfindung besteht darin, ein Verfahren vorzuschlagen, mit dem auch zulässige Formabweichungen aufweisende Bauteile ohne manuelle Eingriffe in automatisierter Fertigung zu qualitätsgerechten Karosseriebaugruppen gefügt sowie übermäßige Formabweichungen aufweisende und damit grundsätzlich unbrauchbare Bauteile vor dem Fügen ausgesondert werden können und insbesondere von der Vorschaltung eines allein auf den Erfahrungen des Bedieners beruhenden langwierigen Probelaufes abgesehen werden kann. Ferner soll eine Vorrichtung zur Durchführung des Verfahrens geschaffen werden.

Diese Aufgabe wird bei einem gattungsgemäßen Verfahren mit den im Kennzeichen des Patentanspruchs 1 angegebenen Merkmalen gelöst.

Hierfür wird eine Vorrichtung mit den im Patentanspruch 3 angeführten Merkmalen vorgeschlagen.

Vorteilhafte Weiterbildungen der Erfindung sind Gegenstand der jeweils abhängigen Unteransprüche 2 sowie 4 und 5.

Die Vorteile der Erfindung bestehen darin, dass für den laufenden Bearbeitungszyklus auf gespeicherte Daten aus vorhergehenden Bearbeitungszyklen zurückgegriffen werden kann, zu denen das erstmalige Vermessen der nunmehr zu fügenden Bauteile eine identische oder ähnliche Konstellation hinsichtlich der messtechnisch ermittelten Formabweichungen vor dem Fügen ergibt und die verwendeten Korrekturwerte für die höhenmäßige Verstellung der Spannauflagen zu dem gewünschten Bearbeitungsergebnis hinsichtlich tolerierbarer Geometrieabweichungen nach dem Fügen der Bauteile zur Karosseriebaugruppe geführt hat. Somit können das automatisierte Fügen der Bauteile zu einer Karosseriebaugruppe qualitätsgerecht und ohne manuelle Eingriffe abgesichert, unbrauchbare Bauteile vor dem Fügen ausgesondert und insbesondere auf die Vorschaltung eines allein auf den Erfahrungen des Bedieners beruhenden langwierigen Probelaufes verzichtet werden.

in den Zeichnungen ist ein Ausführungsbeispiei einer Vorrichtung zur Durchführung des erfindungsgemäßen Verfahrens dargestellt, das nachfolgend beschrieben wird. Es zeigen:
- Fig. 1: den grundsätzlichen Aufbau der erfindungsgemäßen Vorrichtung in vereinfachter perspektivischer Darstellung
- Fig. 2: eine Seitenansicht einer der Antrieb-Spannauflage-Senor-Einheiten
- Fig. 3: ein Blockschaltbild des erfindungsgemäßen Verfahrensablaufes

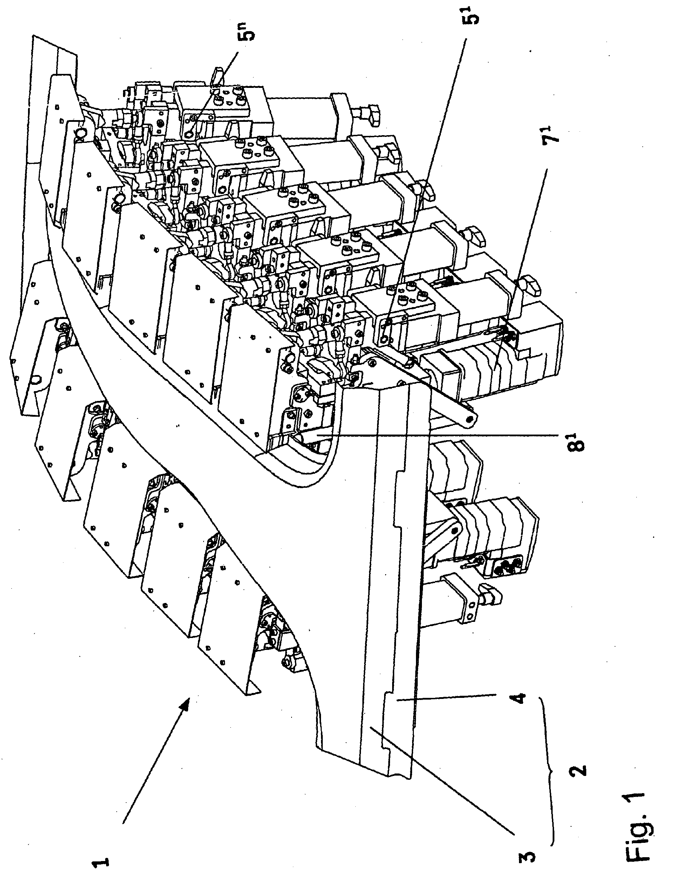

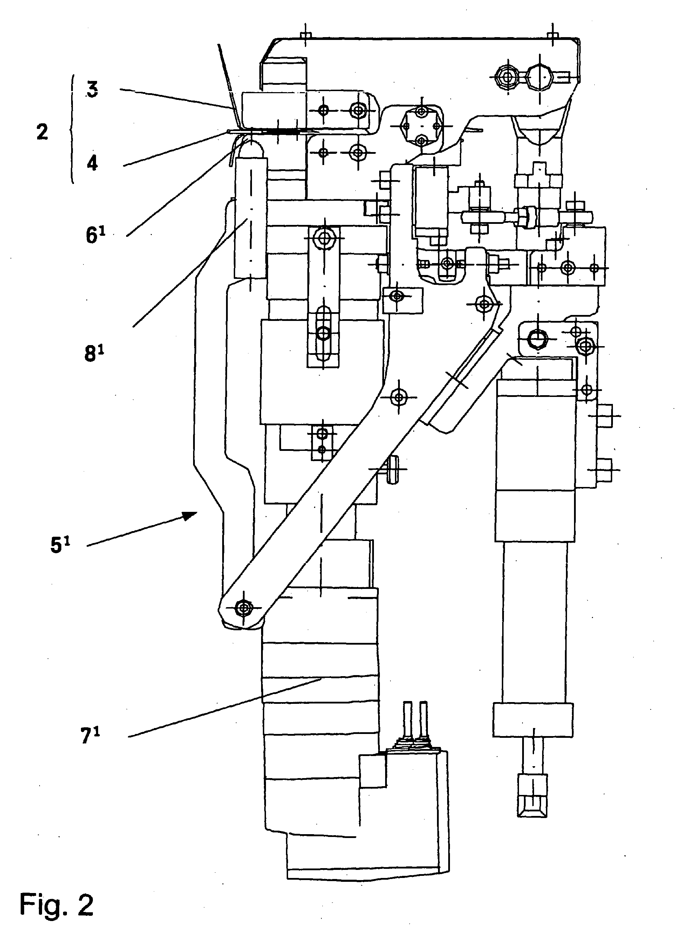

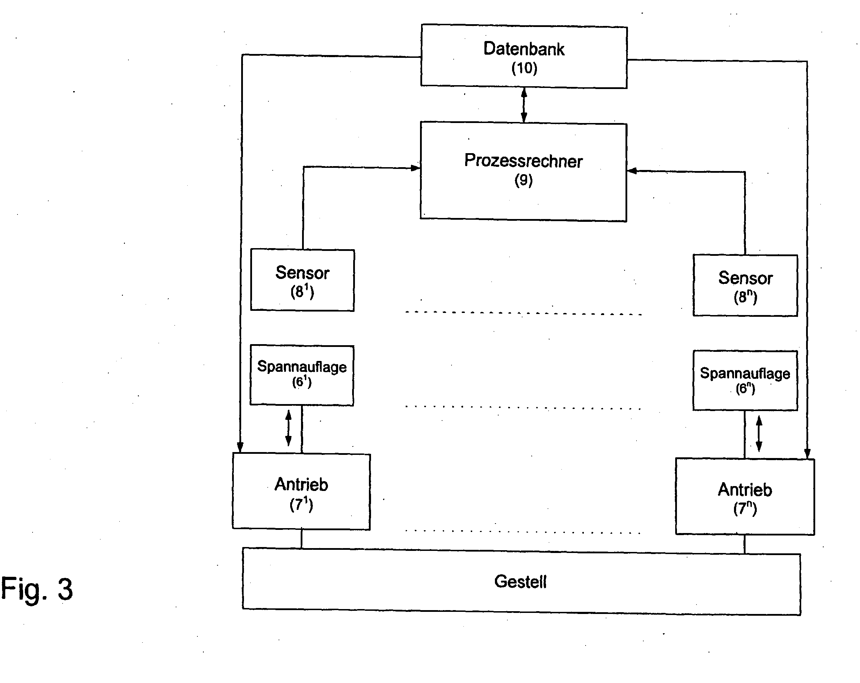

In der Figur 1 ist eine Vorrichtung 1 zur Beeinflussung der Bauteillage bei der Herstellung einer Karosseriebaugruppe 2 in Form einer B-Säule für eine Kraftfahrzeugkarosserie aus mindestens zwei zu verschweißenden Bauteilen 3, 4 dargestellt. Diese besteht aus einem Gestell mit mehreren Antrieb-Spannauflage-Senor-Einheiten 5¹ - 5ⁿ, deren Spannauflagen 6¹ - 6ⁿ (siehe auch Fig. 2) über einen z.B. als Antriebsmotor oder pneumatischen Zylinder ausgebildeten Antrieb 7¹ - 7ⁿ höherverstellbar ausgeführt sind und einen vorteilhafterweise als Laserdistanzsensor ausgestalteten Sensor 8¹ - 8" (siehe Fig. 3) zur Bestimmung der Lage der Bauteile 3, 4 aufweisen. Sowohl der jeweilige Antrieb 7¹ - 7ⁿ als auch der Sensor 8¹ - 8" sind mit einem Prozessrechner 9 verbunden, welcher eine Datenbank 10 einschließt (siehe Fig. 3).
Unter Bezugnahme auf Fig. 3 werden zur Durchführung des Verfahren die zu einer Karosseriebaugruppe 2 (B-Säule) zu verschweißenden Bauteile 3, 4 auf die Spannauflagen 6¹ - 6ⁿ aufgelegt und in Bezug auf Geometrieabweichungen gegenüber vorgegebenen Sollwerten mittels der Sensoren 8¹ - 8ⁿ vermessen. Die Speicherung der Messergebnisse erfolgt in der Datenbank 10. Sofern Abweichungen in Gegenüberstellung zu den Sollwerten ermittelt worden sind, wird eine höhenmäßige Korrekturverstellung einer oder mehrerer der Spannauflagen 6¹ - 6ⁿ um die vom Prozessrechner 9 in Verbindung mit den aus der Datenbank 10 ermittelten Werte vorgenommen, wobei diese Werte aus in vorhergehenden Bearbeitungszyklen gespeicherten Korrekturwerten abgehoben werden. Dadurch sind Einflüsse aus dem nachfolgenden Bearbeitungszyklus, z. B. Bauteilverzug durch Wärmeeintrag während des Schweißprozesses bereits vorab in Richtung der zu erreichenden Sollwerte für die herzustellende Karosseriebaugruppe 2 korrigierbar. Nach der Fixierung der Bauteile 3, 4 erfolgt der Schweißprozess, bei dem die beiden Bauteile 3, 4 zur Bildung der Karosseriebaugruppe 2 zusammengefügt werden. Nach dem Lösen der Spannbacken wird die gefertigte Karosseriebaugruppe 2 erneut durch die Sensoren 8¹- 8ⁿ im Bereich der Spannauflagen 6¹ - 6ⁿ vermessen. Dabei werden die nunmehr ermittelten Messwerte in Gegenüberstellung zu den Messergebnissen nach dem Auflegen auf die Spannauflagen 6¹ - 6ⁿ und den zu erzielenden Sollwerten für die Korrektur der nachfolgend zu fügenden Bauteile 3, 4 zur Verfügung gestellt, indem diese Korrekturwerte in der rechnergestützten Datenbank 10 abrufbereit gespeichert werden. Nach der Entnahme der Karosseriebaugruppe 2 aus der Vorrichtung 1 ist der laufende Bearbeitungszyklus beendet.

Mit dem Auflegen der Bauteile 3, 4 auf die Spannauflagen 6¹ - 6ⁿ, deren Vermessung sowie Speicherung der Messergebnisse in der Datenbank 10 wird ein erneuter Bearbeitungszyklus eingeleitet. Die dabei gewonnenen Messwerte werden mit Bezug auf die in der Datenbank 10 bereits gespeicherten Daten dahingehend überprüft, ob aus früheren Bearbeitungszyklen eine identische oder ähnliche Konstellation bereits bekannt ist und diese unter Nutzung der ehemals erfolgten Korrekturwerte für die höhenmäßige Verstellung der Spannauflagen 6¹ - 6ⁿ auch zu einem erwünschten Bearbeitungsergebnis hinsichtlich tolerierbarer Geometrieabweichungen für eine der bereits gefertigten Karosseriebaugruppen 2 geführt hat. Sofern eine solche Konstellation in der Datenbank 10 ermittelt worden ist, werden die zugehörigen Korrekturwerte für die höhenmäßige Verstellung der Spannauflagen 6¹ - 6ⁿ auch für den laufenden Bearbeitungszyklus übernommen und führen somit ebenfalls zum gewünschten Bearbeitungsergebnis. Ist demgegenüber eine vergleichbare Konstellation aus früheren Bearbeitungszyklen in der Datenbank 10 nicht verfügbar, dann erfolgt eine Korrektur der Bauteillage durch höhenmäßige Korrekturverstellung der Spannauflage entgegen der Abweichungsrichtung von der Sollposition. Nach Beendigung des Bearbeitungszyklus erfolgt ein neuer Eintrag in die Datenbank mit entsprechender Auswertung des Korrekturwertes.

Bei der Verfahrensdurchführung besteht die Möglichkeit, eine von den Sollwerten abweichende Korrektur der Spannauflagen 6¹ - 6ⁿ vorzunehmen. Dadurch wird ermöglich, dass auch vorab Korrekturen an der Bauteillage vorgenommen werden mit dem Ziel, prozessbedingte Abweichungen z.B. aufgrund von Bauteilverzug durch Wärmeeintrag so korrigieren zu können, dass nach Beendigung des Bearbeitungszyklus das Bauteil den Sollmaßen entspricht.

### Bezugszeichenliste

- 1: Vorrichtung
- 2: Karosseriebaugruppe
- 3: Bauteil
- 4: Bauteil
- 5¹ - 5ⁿ: Antrieb-Spannauflage-Senor-Einheit
- 6¹ - 6ⁿ: Spannauflage
- 7¹ - 7ⁿ: Antrieb
- 8¹ - 8ⁿ: Sensor
- 9: Prozessrechner
- 10: Datenbank

## Patentansprüche

1. Verfahren zur Beeinflussung der Bauteillage bei der Herstellung von zu fügenden/partiell umzuformenden Kraftfahrzeugkarosseriebauteilen, wobei die Bauteile auf Spannauflagen aufgelegt, verspannt und nachfolgend zu einer Karosseriebaugruppe verbunden werden, wobei
- die Bauteile (3, 4) nach dem Auflegen auf die Spannauflagen (6¹- 6ⁿ) in Bezug au Geometrieabweichungen gegenüber vorgegebenen Sollwerten vermessen und die Messergebnisse in einer Datenbank (10) gespeichert werden,
- sofern Abweichungen in Gegenüberstellung zu den Sollwerten ermittelt worden sind, eine höhenmäßige Korrekturverstellung einer oder mehrerer der Spannauflagen (6¹ - 6ⁿ) um die von einem Prozessrechner (9) in Verbindung mit den aus der Datenbank (10) ermittelten Werte vorgenommen wird, wobei diese Werte aus in vorhergehenden Bearbeitungszyklen gespeicherten Korrekturwerten abgehoben werden, um Einflüsse aus dem nachfolgenden Bearbeitungszyklus bereits vorab in Richtung der zu erreichenden Sollwerte zu korrigieren,
- die Bauteile (3, 4) anschließend gespannt werden und der Füge-/Umformprozess zur Bildung einer Karosseriebaugruppe (2) durchgeführt wird,
- nachfolgend die Spannung gelöst und die somit gefertigte Karosseriebaugruppe (2) erneut im Bereich der Spannauflagen (6¹- 6ⁿ) vermessen wird, wobei diese nunmehr ermittelten Messergebnisse in Gegenüberstellung zu den Messergebnissen nach dem Auflegen auf die Spannauflagen (6¹ - 6ⁿ) und den zu erzielenden Sollwerten für die Korrektur der nachfolgend zu fügenden Bauteile (3, 4) zur Verfügung stehen, indem diese Korrekturwerte in einer rechnergestützten Datenbank (10) abrufbereit gespeichert werden.

2. Verfahren nach Anspruch 1, **dadurch gekennzeichnet,**
**dass** eine von den Sollwerten abweichende Korrektur der Spannauflagen (6¹ - 6ⁿ) vorgenommen wird.

3. Vorrichtung zur Durchführung des Verfahrens nach Anspruch 1, bestehend aus einem Gestell mit einer Spannvorrichtung und mehreren Spannauflagen,
**dadurch gekennzeichnet,**
**dass** jede der Spannauflagen (6¹ - 6ⁿ) über einen Antrieb (7¹ - 7ⁿ) höherverstellbar ausgebildet ist und einen Sensor (8¹ - 8ⁿ) zur Bestimmung der Lage der Bauteile (3, 4) aufweist, wobei der Antrieb (7¹-7ⁿ) und der Sensor (8¹-8ⁿ) mit einem eine Datenbank (10) beinhaltenden Prozessrechner (9) verbunden sind.

4. Vorrichtung nach Anspruch 3,
**dadurch gekennzeichnet,**
**dass** der Antrieb (7¹ - 7ⁿ) als Antriebsmotor oder pneumatischer Zylinder ausgestaltet ist.

5. Vorrichtung nach Anspruch 3,
**dadurch gekennzeichnet,**
**dass** der Sensor (8¹- 8ⁿ) als Laserdistanzsensor ausgebildet ist.

## Claims

1. A method for controlling the positioning of a part during the manufacturing of motor vehicle parts to be joined/partially shaped wherein the parts are placed onto chucking pads, chucked, and joined into a vehicle body sub-assembly, and wherein,
- after placement onto the chucking pads (6¹ - 6ⁿ), the parts (3, 4) are measured for geometry deviations from the predefined setpoint values and the results of said measurement are stored in a database (10),
- if deviations from the setpoint values have been determined, the height of one or several chucking pads (6¹ - 6ⁿ) is adjusted by values determined by a process control computer (9) in conjunction with the database (10), said values being lifted off adjustment values stored from previous processing cycles to adjust influences of a subsequent processing cycle in advance in the direction of the setpoint values to be achieved,
- said parts (3, 4) are then chucked and joined/shaped accordingly to form a vehicle body sub-assembly (2),
- the chucking is then released, and the vehicle body sub-assembly (2) thus produced is measured repeatedly within the range of the chucking pads (6¹ - 6ⁿ), wherein the measurement results achieved now by comparing the measurement results upon placement on the chucking pads (6¹ - 6ⁿ) and the setpoints to be achieved, will once again be available for adjustment of parts (3, 4) to be joined subsequently, in that these adjustment values are stored ready for retrieval in a computer-aided database (10).

2. The method according to Claim 1, **characterized**
**in that** an adjustment of the chucking pads (6¹ - 6ⁿ) that deviates from the setpoint values is made.

3. An apparatus for performing the method of Claim 1, consisting of a frame with a chucking device and multiple chucking pads,
**characterized in that**
each of the chucking pads (6¹ - 6ⁿ) can be adjusted in height by a drive (7¹ - 7ⁿ) and comprises a sensor (8¹ - 8ⁿ) to determine the position of parts (3, 4),
said drive (7¹ - 7ⁿ) and sensor (8¹ - 8ⁿ) being connected to a process control computer (9) that contains the database (10).

4. The device according to Claim 3,
**characterized in that**
the drive (7¹ - 7ⁿ) is either designed as a drive motor or a pneumatic cylinder.

5. The device according to Claim 3,
**characterized in that**
the sensor (8¹ - 8ⁿ) is designed as a laser distance sensor.

## Revendications

1. Méthode et appareil de contrôle du positionnement d'une pièce pendant la manufacture et l'assemblage/partiellement formage de pièces de carrosserie de véhicules automobiles, où les pièces sont posées et fixées sur des appuis de serrage afin d'en assembler des pièces de carrosserie, où
- une fois posées sur les appuis de serrage (6¹ - 6ⁿ), les pièces (3, 4) sont mesurées pour détecter les divergences géométriques par rapport aux valeurs de consigne spécifiées, les résultats de mesure étant mémorisés dans une banque de données (10),
- lorsque la comparaison des données mesurées aux valeurs de consigne a permis de détecter des divergences géométriques, il est effectué un réglage en hauteur sur un ou plusieurs appuis de serrage (6¹ - 6ⁿ), ce réglage étant déterminé par les valeurs calculées par un ordinateur (9) qui, lui, vient de traiter les valeurs mémorisées dans la banque de données (10), et où ces valeurs sont distinguées de données de correction qui, elles, ont été mémorisées auparavant lors de plusieurs cycles de traitement, ceci pour corriger déjà au préalable les éventuelles variations obtenues lors du cycle de traitement suivant et les adapter aux valeurs de consigne spécifiées,
- les pièces (3, 4) sont ensuite serrées afin de commencer le procédé d'assemblage/formage aboutissant à la manufacture d'une pièce de carrosserie (2),
- après son desserrage, la pièce de carrosserie (2) ainsi fabriquée est à nouveau mesurée au niveau des appuis de serrage (6¹ - 6ⁿ), les nouveaux et actuels résultats de mesure pouvant maintenant être comparés, tant à ceux qui ont été obtenus juste après avoir mis les appuis de serrage (6¹ - 6ⁿ) qu'aux valeurs de consigne spécifiées, ceci permettant de corriger, en mémorisant les données de correction dans une banque de données informatisée (10) où celles-ci peuvent être consultées à tout moment, les pièces suivantes (3, 4) à former.

2. Dispositif suivant la revendication 1, **caractérisé en ce qu'**une correction des données différentes des valeurs de consigne est effectuée sur les appuis de serrage (6¹ - 6ⁿ).

3. Dispositif servant à réaliser le procédé suivant la revendication 1, composé d'un bâti sur lequel est monté un dispositif de serrage avec plusieurs appuis de serrage, **caractérisé en ce que**, grâce à un mécanisme d'entraînement (7¹ - 7ⁿ), chacun de ces appuis de serrage
(6¹ - 6ⁿ) est réglable en hauteur et est muni d'un capteur (8¹ - 8ⁿ) qui, lui, permet de déterminer la position des pièces (3, 4), le mécanisme d'entraînement (7¹ - 7ⁿ) et le capteur (8¹ - 8ⁿ) étant connectés à un ordinateur (9) mémorisant une banque de données (10).

4. Dispositif suivant la revendication 3, **caractérisé en ce que** le mécanisme d'entraînement (7¹ - 7ⁿ) est un moteur d'entraînement ou un vérin pneumatique.

5. Dispositif suivant la revendication 3, **caractérisé en ce que** le capteur (8¹ - 8ⁿ) est un capteur laser de distance.
